Europäisches Patentamt

European Patent Office

Office européen des brevets

(19)

(11) Publication number: **0 039 378**
**A1**

(12) **EUROPEAN PATENT APPLICATION**

(21) Application number: 80301496.8

(22) Date of filing: 07.05.80

(51) Int. Cl.³: **F 02 M 31/02**

(43) Date of publication of application: **11.11.81**
**Bulletin 81/45**

(84) Designated Contracting States: **AT BE CH DE FR GB IT LI LU NL SE**

(71) Applicant: **Cha, Dok Young, 302-28 Echon-dong, Yongsan-ku Seoul (KR)**

(72) Inventor: **Cha, Dok Young, 302-28 Echon-dong, Yongsan-ku Seoul (KR)**

(74) Representative: **Jackson, Peter Arthur et al, GILL JENNINGS & EVERY 53 to 64, Chancery Lane, London WC2A 1HN (GB)**

(54) **Device for vaporizing diesel oil used as a fuel in a spark ignited internal combustion engine.**

(57) A low compression ratio internal combustion engine using spark ignition, and a carburetor (18) for fuel-air mixing, is provided with an exhaust gas heat recovery system (2, 8) which preconditions incoming fuel to permit diesel oil fuel to be burned. The heat recovery system puts the engine exhaust manifold in heat exchange relation with the intake manifold by intimate relative spatial disposition therebetween. A heater (20, 23) is also provided for vaporising the diesel fuel on start-up.

.0039378

- 1 -

DOK YOUNG CHA                                   GJE 5080/075

<u>INTERNAL COMBUSTION ENGINE</u>

This invention relates to a novel kind of internal combustion engine which is capable of using diesel oil as its fuel and in particular to modifications to a petrol engine to permit the use of diesel oil as its fuel, so that the diesel oil vaporizes, even in cold weather, in a modified carburetor or intake manifold as easily and sufficiently as petol.

The three types of internal combustion engines are characterized by the fuels which they use: petrol engine, kerosene engine, and diesel engine.

One of the main advantages of a petrol engine is the volatility of the fuel, and the simplicity of the fuel and air intake mechanism. The fuel can be ignited electrically under a low compression ratio, which results in an engine of low weight and one which can be easily manufactured. During operation there is little engine noise and vibration, making it suitable for use in passenger cars. The main disadvantage is the high cost of petrol.

Vaporization in a kerosene engine occurs at temperatures higher than that required for petrol. In order to achieve this higher temperature, the engine must be first started using petrol as a fuel. This dual fuel procedure entails a complicated engine structure, higher manufacturing costs and inconvenience to the operator of the engine.

In addition, the engine must keep operating at high speeds in order that combustion of fuel may properly be maintained. These disadvantages are balanced by the fact that kerosene is less expensive than petrol.

In a diesel engine, ignition is not achieved electrically due to the high vaporization temperatures required. Diesel fuel is injected from a fuel injector nozzle into the compressed air which has attained high temperatures, thus permitting the burning of the fuel. In order to obtain a high degree of compression, the piston stroke, that is, the distance between the highest and lowest points of the piston's movements, must be greater than that for a gasoline engine. This results in a greater mechanical stress on the engine when operating at high speeds. However, low speed operation causes engine vibration and noise, making it unsuitable for use in small engines such as passenger cars. In addition, the fuel system must be very accurately balanced, which. results in a heavier, bulkier engine and a complicated structure. High pressures and high piston speeds can cause the cylinders, pistons and piston rings to wear out rapidly. Wear on these parts decreases the compression ratio, causing a drop in combustion efficiency and an increase in pollution from the exhaust. Repairs to correct this can be costly.

In accordance with the invention, an internal combustion engine which is arranged to use diesel oil as its fuel is characterised by an exhaust manifold; an intake manifold, the intake manifold being in heat exchange relation with the exhaust manifold whereby the heat in the exhaust gases is transferred to the fuel to vaporize the fuel in the intake manifold; a carburetor;

and a heating apparatus, disposed at the carburetor and operable to heat fuel passing through the carburetor.

With this construction , the heating apparatus vaporises the diesel oil which mixes with air being drawn into the engine. The resulting mixture is suitable for combustion in a relatively low compression ratio petrol-type internal combustion engine using spark ignition. After the engine has started up it may be possible to switch off the heating apparatus if the heat exchange from the exhaust gases to the fuel is sufficient to vaporise the diesel oil. This may be controlled by a temperature sensor in the intake manifold. The engine provides good combustion efficiency and easy ignition.

The exhaust manifold may pass through the intake manifold, or vice versa, to provide the heat exchange.

Some examples of engines constructed in accordance with the invention are illustrated in the accompanying drawings, in which:-

Figure 1 is a perspective schematic view of one engine;

Figure 2 is a diagrammatic sectional view of Figure 1 in assembled condition;

Figure 3 is a partial cutaway plan view of the intake and exhaust manifolds as well as the heater and electric circuit;

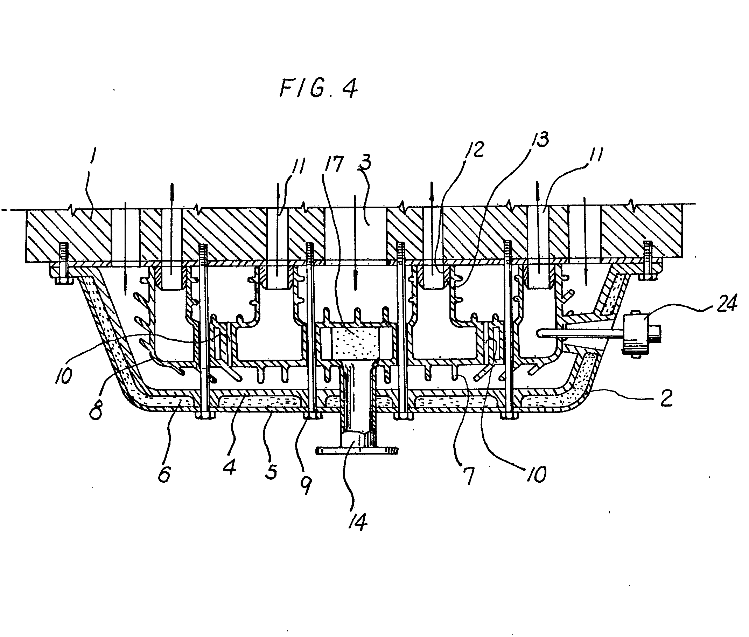

Figure 4 is a section taken on the line A-A in Figure 2;

Figure 5 is a section taken on the line B-B in Figure 2;

Figure 6 is a sectional view of an alternative, vertical type of carburetor which could be used;

Figure 7 is a partial cutaway perspective view of another example of part of an engine in which the exhaust manifold passes through the intake manifold;

Figure 8 is a section taken on the line C-C in Figure 7;

Figure 9 (A) is a perspective view of a heating element used in the engines; and,

Figure 9 (B) is a section taken on the line D-D in Figure 9 (A).

Generally, as described in detail below, the carburetor of an engine is provided with two sets of electrically energised heating apparatus 20, 23, with an intake manifold 8 passing through an exhaust manifold 2.

With this structure, the electrically activated heating apparatus 20, 23 vaporizes the diesel oil as it passes through a carburetor 18 and the intake manifold 8. Mixed with incoming air, the diesel oil vapours are easily ignited in the engine combustion chamber 33 by spark plugs 30. Once the engine is running, the intake manifold 8 recovers a great part of the waste heat of the gas discharged through the exhaust manifold, 2, thereby allowing the intake manifold 8 to become sufficiently heated to permit vaporization of the diesel fuel. When the temperature in the intake manifold 8 rises to around $360^{o}C$, a thermostat 24 switches off the electric current to the heating apparatus 20, 23. The diesel oil is then vaporized in the intake manifold 8 and not in the heating apparatus 20, 23.

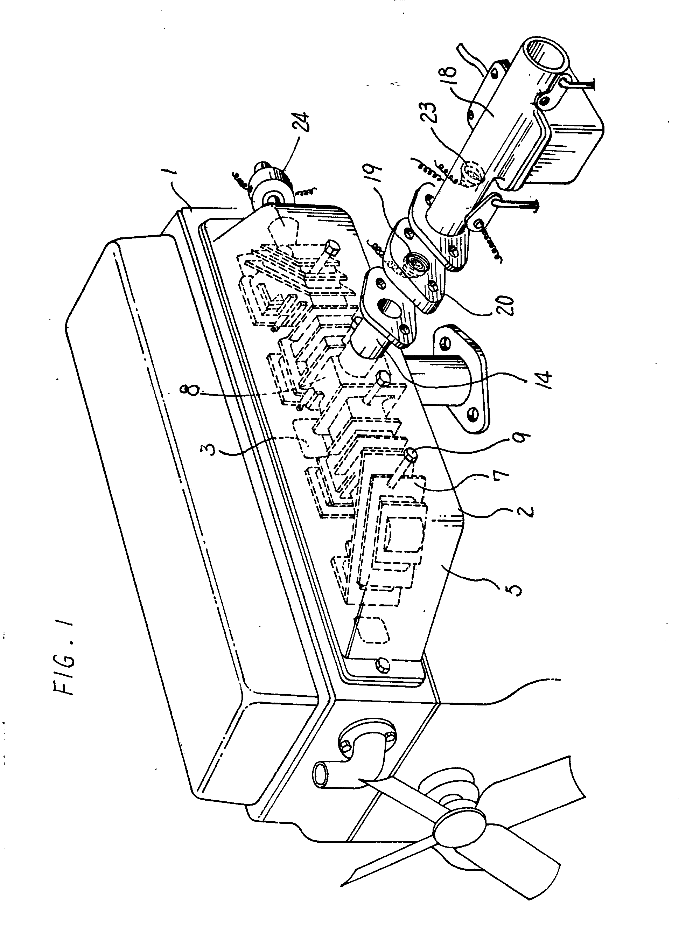

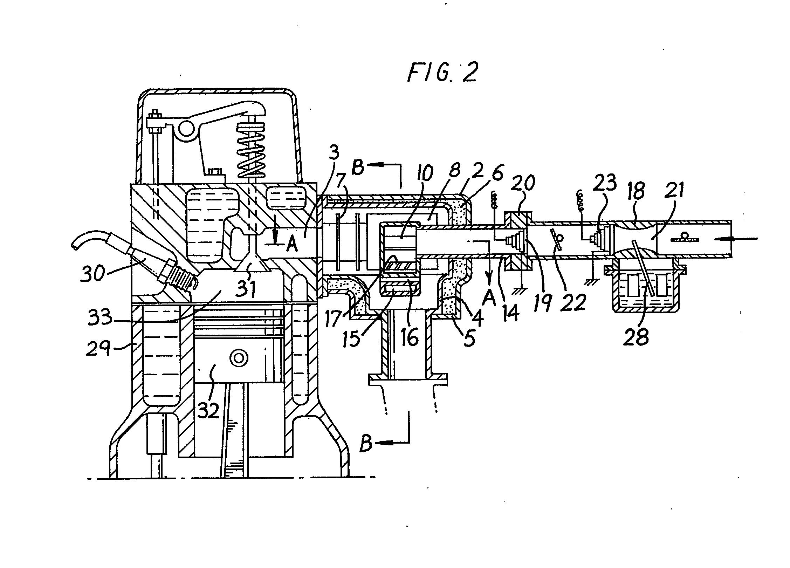

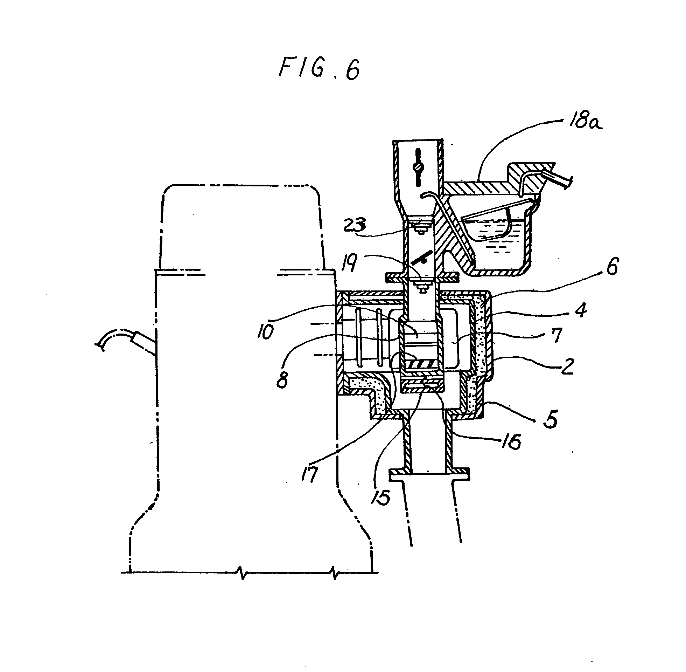

More specifically, and as illustrated in Figure 1, the exhaust manifold 2 is attached to a cylinder head 1 of the engine, and the intake manifold 8 is designed to pass through and be welded to the inside of the exhaust manifold 2. Two sets of heating apparatus 20, 23 comprising a coiled heating element 19 are provided between an end portion 14 of the intake manifold and the carburetor 18, and between a venturi 21 and a throttle valve 22 in the carburetor 18 (Figures 2 and 6).

Several exhaust pipes 3 leading from the cylinder head 1 extend to the exhaust manifold 2 thereby communicating with each other. The exhaust manifold 2 has inner walls 4 and outer walls 5 between which insulation 6 is placed.

The intake manifold 8 is preferably fitted with heat exchange means in the form of numerous protrusions 7 on its exterior to enhance its heat absorbing characteristics. The intake manifold is bolted 9 to the cylinder head 1 and is provided with tubes 10 through which the exhaust gas passes. A short tube 12, whose end 13 is inwardly tapered, is fixed between and connects each intake valve 11 of the cylinder head and the ends of the intake manifold.

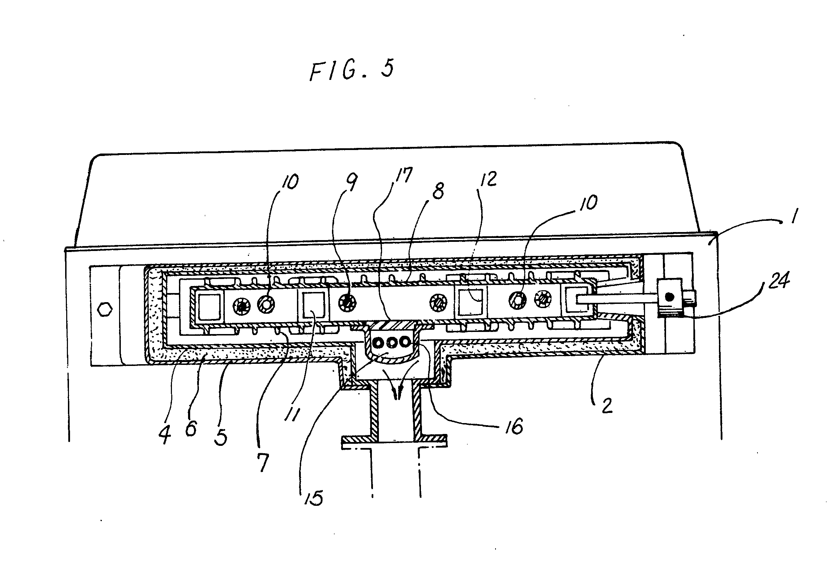

A small chamber 15 (Figures 2 and 5) located in the middle of the intake manifold 8 stores liquefied fuel and includes a rectangularly shaped, porous, absorbent plate 17 and tubes 16. The exhaust gas passes through the tubes and heats them. The absorbent plate 17, an excellent conductor of heat, absorbs and passes the liquefied fuel into chamber 15 for storage therein.

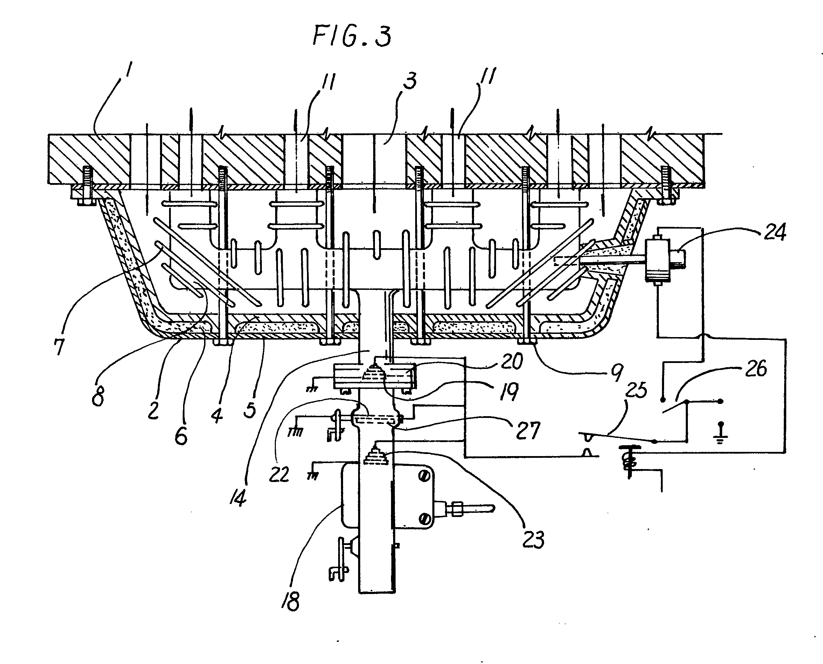

As illustrated in Figure 3, an electric current flows to the heating apparatus 20, 23 through relay contacts 25, switch 26 and thermostat 24. Thermostat 24 is inserted through the intake manifold 8 into contact with protrustions 7. In this way, thermostat 24 is responsive to the temperature changes occurring at the inner wall of the intake manifold. When the temperature approaches $360^{\circ}C$, thermostat 24 opens the relay circuit thereby releasing the contacts and cutting the flow of electric current to heating apparatus 20, 23.

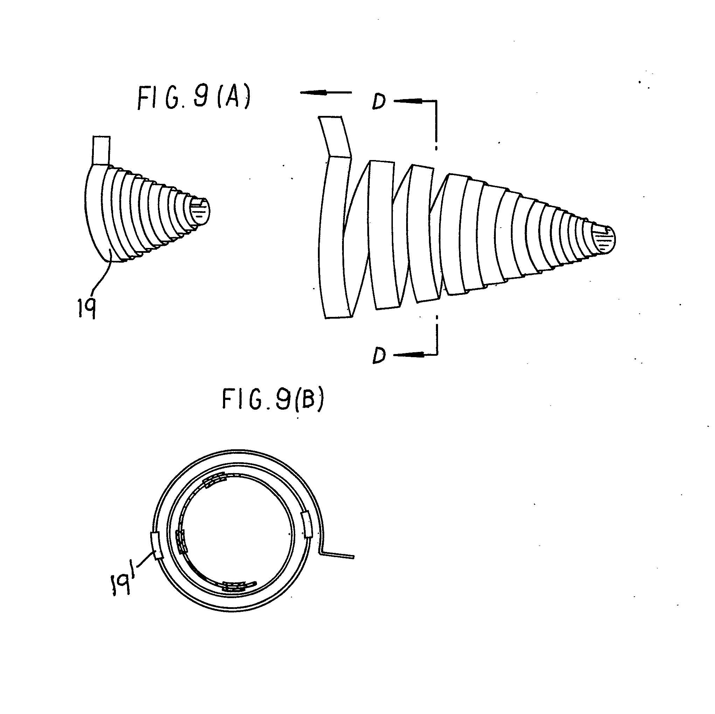

Each heating apparatus 20, 23 preferably comprises a spirally coiled and funnel shaped ribbon, resistance heating element 19 (Figures 9 (A), 9 (B)) to which insulators have been affixed prior to coiling. The function of the insulators is to prevent the heating element from being short circuited. The throttle valve is also preferably heated by a heater 27 attached to it (Figure 3).

Reference numbers 28, 29, 30, 31, 32 and 33 as shown in Figure 2 refer generally to usual parts of a combustion engine and are, respectively, the main nozzle of the carburetor, cylinder block, spark plug, exhaust valve, piston and combustion chamber.

Operation of an engine fitting with the preferred embodiment of this invention is described below.

When the ignition switch is turned on, one contact starts the operation of the starting motor and another the heating elements. The heating apparatus can easily achieve a temperature ranging from $300^{\circ}C$ - $360^{\circ}C$ at which the diesel oil, injected from a main nozzle, is vaporized sufficiently. Diesel oil is injected into the carburetor, mixed with air, is heated and vaporized as it passes through the two heating elements and exits the intake manifold into the combustion chamber where it is ignited by the spark plugs.

A small amount of the vaporized diesel oil is liquefied when it passes the cool intake manifold. Most of it is then absorbed by plate 17 and stored in chamber 15, and the remainder is trapped in the area formed at the end 13 of the tube with the end which tapers inward. This stored and trapped diesel oil is later vaporized when the exhaust gas of the engine heats the intake manifold.

Such vaporization occurs until the inner wall of the intake manifold reaches an approximate temperature of $360^{\circ}C$, at which point the thermostat 24 opens the heating circuit. Because the heat of the intake manifold 8, which is heated by the waste heat of the gas discharged through the exhaust manifold 2, is sufficient to vaporize the liquid fuel, combustion of the fuel and air mixture is continuous. This recovery of waste heat also helps increase the efficiency of the engine.

When a decreased engine speed is maintained, the diesel oil influx from the main nozzle is decreased by means of throttle valve 22, thereby resulting in decreased exhaust gas temperatures and a lowering of the temperature of the intake manifold. The thermostat will close and activate the operation of the heating apparatus which will, in turn, vaporize the diesel oil to sustain combustion.

It is preferable for the engine of this invention to be further modified by fitting with the same piston rings as would be used in a diesel engine and to enlarge the combustion chamber in comparison with a petrol engine. To facilitate repair, it is also preferable to make the heating apparatus 20 changeable.

Figure 6 shows a vertical type carburetor 18a to which the heating apparatus 19, 23 is applied. The operation and effects of the heating apparatus 19, 23 are the same as in the above-mentioned horizontal type carburetor 18.

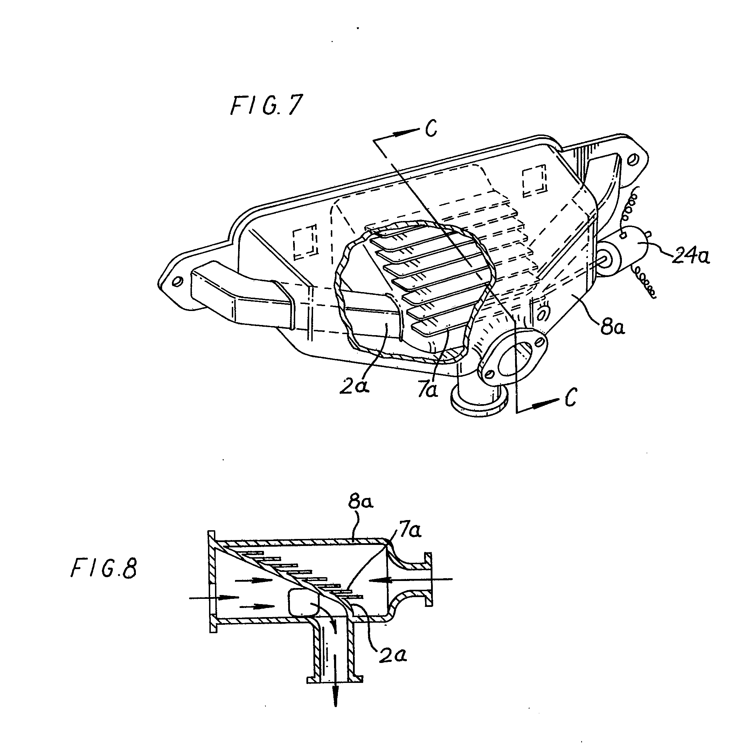

Figures 7 and 8 show an intake 8a and exhaust 2a manifolds assembly of other embodiments of this invention, in which the exhaust manifold passes through the intake manifold which has internal protrusions from its wall to improve the heat exchange. This embodiment is considered more effective in recovering of waste heat and vaporizing of the fuel than the previous embodiments.

As described above, the engine in accordance with the invention enjoys the same advantages as petrol engines because its structure is the same as a petrol engine except for the carburetor, intake manifold and exhaust manifold. More importantly, the engine uses

0039378

diesel oil, which is less expensive than petrol, as its fuel. In addition, the engine can be manufactured with lower cost, but with better combustion efficiency, lower vibration levels, and lower noise levels as compared with prior diesel engines.

CLAIMS

1.    An internal combustion engine which is arranged to use diesel oil as its fuel; the engine being characterised by an exhaust manifold, (2); an intake manifold (8), the intake manifold being in heat exchange relation with the exhaust manifold whereby the heat in the exhaust gases is transferred to the fuel to vaporize the fuel in the intake manifold; a carburetor (18) and a heating apparatus (20, 23), disposed at the carburetor and operable to heat fuel through the carburetor.

2.    An engine according to claim 1, wherein one of the exhaust manifold and intake manifold passes through the other of the exhaust manifold and intake manifold thereby to establish the heat exchange relation.

3.    An engine according to claim 2, wherein the intake manifold has protrustions from its wall thereby to improve the heat exchange relation.

4.    An engine according to any one of the preceding claims, further comprising a liquid fuel receiving chamber (15) disposed in the intake manifold; a porous plate (17) communicating fluids flowing through the intake manifold with the chamber and operable to absorb liquid fuel from the fluids to conduct them into the chamber for storage; and tubes (16) passing through the chamber and connected with the exhaust manifold to carry hot exhaust gases, thereby to heat liquid stored in the chamber.

5.  An engine according to any one of the preceding claims, further comprising short tubes (12) having inwardly tapered ends (13), the short tubes communicating the intake valves (11) of the cylinder head and the ends of the intake manifold.

6.  An engine according to any one of the preceding claims, further comprising two of the heating apparatus each having a heating element (19), a first one (20) of the heating apparatus being disposed between end portions of the intake manifold and the carburetor, and the second one (23) of the heating apparatus (23) being disposed between a venturi (21) and the throttle valve (22) of the carburetor.

7.  An engine according to claim 6, wherein the first heating apparatus is readily replaceable.

8.  An engine according to claim 6 or claim 7, further comprising a third heating apparatus (27) on the throttle valve for heating the throttle valve.

9.  An engine according to any one of the preceding claims, wherein the heating apparatus comprises a ribbon of resistance material.

10.  An engine according to claim 9, wherein the resistance material is spiraled into a funnel shape.

11.  An engine according to any one of the preceding claims, further comprising temperature responsive means (24) inserted through the intake manifold and abutting the inner wall thereof, the temperature responsive means being connected to the or each of the heating apparatus to control its operation in response to temperature changes occurring at the inner wall of the intake manifold.

FIG. 1

FIG. 2

FIG.3

FIG. 4

FIG. 5

FIG.6

FIG.7

C

24a

8a

2a          7a

C

FIG.8

8a

7a

2a

0039378

FIG. 9 (A)

19

FIG.9(B)

19'

European Patent
Office

**EUROPEAN SEARCH REPORT**

0039378
Application number

EP 80 30 1496

| Category | Citation of document with indication, where appropriate, of relevant passages | Relevant to claim |
|---|---|---|
| | **DOCUMENTS CONSIDERED TO BE RELEVANT** | |
| | FR - A - 954 832 (BEZARD) <br> * Page 1, lines 6-19; 40-52; page 2, lines 3-17; 26-34 * <br><br> -- | 1 |
| | FR - A - 753 207 (SHORE CORP.) <br> * Page 1, lines 1-13; 23-31; 48-51; page 2, lines 57-86; page 4, lines 72-88; page 5, lines 63-93; page 6, lines 32-42; 48-94; page 7, lines 11-23; 42-55 * <br><br> -- | 1-3,5, 7,10 |
| | GB - A - 849 523 (LIVERSIDGE) <br> * Page 1, lines 27-54; 64-90; page 2, lines 1-5; 19-65; figures 1,2 * <br><br> -- | 1,2,4 |
| | FR - A - 2 292 119 (CHAUVIN) <br> * Page 1, lines 1-3; 18-31; page 2, lines 5-20; 25-34; figure 1 * <br><br> -- | 1 |
| | US - A - 1 486 833 (ERTZ) <br> * Page 1, lines 10-35; 54-108; page 2, lines 5-22; 68-71 * <br><br> -- | 1,3 |
| | DE - A - 2 508 648 (FICHTEL & SACHS) <br> * Page 1, paragraphs 4,5; page 2, paragraph 1 * <br><br> -- | 1 |
| A | DE - C - 809 270 (GOTZ) <br> * Page 1, lines 13-20; page 2, lines 1-43; 102-118 * ./. <br> -- | 1,2 |

CLASSIFICATION OF THE APPLICATION (Int. Cl.³)

F 02 M 31/02

TECHNICAL FIELDS SEARCHED (Int. Cl.³)

F 02 M

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 07-01-1981 | JORIS |

EPO Form 1503.1 06.78

European Patent
Office

**EUROPEAN SEARCH REPORT**

0039378

Application number

EP 80 30 1496
-2-

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | <u>US - A - 2 323 639</u> (ANDERSON)<br><br>* Page 1, left-hand column, lines 1-13; 35-55; right-hand column, lines 1,2; page 2, left-hand column, lines 73-75; right-hand column, lines 1-44; page 3, right-hand column, lines 7-20 *<br><br>-- | 1 | |
| A | <u>US - A - 3 892 215</u> (HICKLING)<br><br>* Column .4, lines 63-65 *<br><br>-- | 9 | TECHNICAL FIELDS SEARCHED (Int. Cl. 3) |
| A | <u>US - A - 1 422 896</u> (SORENG)<br><br>* Figures 1-3; page 1, lines 10-12; page 2, lines 8-29 *<br><br>-- | 8 | |
| A | <u>US - A - 3 915 137</u> (EVANS)<br><br>* Column 1, lines 63-68 *<br><br>-- | 6 | |
| A | <u>GB - A - 119 879</u> (PARKER)<br><br>* Page 1, lines 5-8; 17-21; 27-34 *<br><br>-- | 6 | |
| A | <u>DE - A - 2 826 976</u> (WASCHKUTTIS)<br><br>* Page 8, paragraph 2 *<br><br>---- | 1 | |